# DEMANDE DE BREVET EUROPEEN

(11) **EP 1 950 087 A1**
(43) Date de publication de la demande: **30.07.2008**
(21) Numéro de dépôt: 08300037.2
(22) Date de dépôt: 18.01.2008
(51) Int. Cl.: B60P 1/273, B60P 1/28, B60P 1/64

(54) **Système de fermeture de porte d'une benne amovible**

(30) Priorité: 25.01.2007 FR 0752873
(71) Demandeur: F.B.I., 42600 Champdieu (FR)
(72) Inventeur: Overzet, Gérard, 03430 Villefranche d'Allier (FR)
(74) Mandataire: Dupuis, François

(57) **Abrégé**

Système de fermeture de porte d'une benne amovible utilisée dans le domaine du transport de matériaux, où la benne (1) est du type associée un camion équipé d'un dispositif comprenant une potence (2) apte à basculer et à se mouvoir longitudinalement, et à saisir la benne (1) en vue soit de la poser sur le sol, soit de la charger sur le châssis du camion, soit de la faire basculer en vue d'un bennage.

Il comprend, d'une part au moins un loquet agençable sur la benne pour verrouiller la porte (11) de la benne (1), et apte à être actionné en ouverture, c'est-à-dire pour libérer la porte (11), par l'intermédiaire d'un moyen moteur pneumatique, et d'autre part un moyen (42) de commande du moyen moteur, agençable sur ladite benne et conçu apte à réagir au mouvement de la benne (1) par rapport à la potence (2) ainsi qu'à l'inclinaison de la benne (1).

## Description

La présente invention a pour objet un système de fermeture de porte d'une benne amovible utilisée dans le domaine du transport de matériaux.

Il est connu, dans le domaine du transport de matériaux, d'utiliser un camion équipé d'un système comprenant une potence basculante apte à saisir une benne en vue soit de la poser sur le sol, soit de la charger sur le châssis dudit camion, ces opérations étant réalisées au travers de l'association de deux mouvements, d'une part d'inclinaison du bras et donc de la benne, et d'autre part de déplacement longitudinal.

Ce dispositif, connu et commercialisé notamment sous la dénomination "AMPLIROLL", est très répandu notamment du fait qu'il est très pratique et d'une grande facilité d'utilisation.

En pratique, les camions équipés de ce dispositif sont essentiellement utilisés de la manière suivante, le camion amène la benne, la dépose et la laisse à demeure le temps de la remplir de matériaux, en vrac généralement, et lorsqu'elle est pleine, ou bien lorsque qu'il n'y a plus de matériaux à évacuer, le camion vient reprendre la benne et l'enlève, pour aller la vider en un autre endroit.

L'opération de vidage s'opère généralement soit en déposant la benne au sol en cumulant les deux mouvements de translation puis de basculement, soit simplement par bennage en n'utilisant que le basculement. Ainsi, selon que l'on décharge ou charge la benne, ou bien que l'on benne son contenu, la porte de ladite benne doit être ouverte ou fermée pendant l'inclinaison de ladite benne. Or, l'ouverture de la porte doit être effectuée manuellement, ce qui est, outre une perte de temps, malaisé pour le conducteur.

On pourrait envisager un dispositif de télécommande permettant d'ouvrir à distance la porte lorsque cela est nécessaire, mais une telle technologie n'est pas compatible avec les utilisations des bennes et le domaine d'activité dans lequel elle sont utilisées. De plus, un tel dispositif, outre le fait qu'il ne serait pas infaillible, nécessiterait que conducteur n'oublie jamais d'ouvrir la porte, et au bon moment.

La présente invention a pour but de remédier à ces divers inconvénients en proposant un système de fermeture de porte d'une benne amovible utilisée dans le domaine du transport de matériaux, permettant que ladite porte puisse s'ouvrir automatiquement si cela est nécessaire.

Le système de fermeture de porte d'une benne amovible utilisée dans le domaine du transport de matériaux selon l'invention, où ladite benne est du type associée un camion équipé d'un dispositif comprenant une potence apte à basculer et à se mouvoir longitudinalement, et à saisir ladite benne en vue soit de la poser sur le sol, soit de la charger sur le châssis dudit camion, soit de la faire basculer en vue d'un bennage, se caractérise en ce qu'il comprend sur ladite benne, d'une part au moins un loquet agencé pour verrouiller la porte de ladite benne, et apte à être actionné en ouverture, c'est-à-dire pour libérer ladite porte, par l'intermédiaire d'un moyen moteur pneumatique, et d'autre part un moyen de commande dudit moyen moteur, conçu apte à réagir au mouvement de ladite benne par rapport à ladite potence ainsi qu'à l'inclinaison de ladite benne.

Ainsi, lorsque qu'il n'y a pas détection de déplacement de la benne par rapport au bras alors qu'il y a détection de l'inclinaison de la benne, c'est-à-dire dans le cas d'un bennage, le loquet est rétracté par le moyen moteur et la porte est déverrouillée, tandis que s'il y a détection du déplacement de la benne par rapport au bras, même s'il y a détection de l'inclinaison de la benne, c'est-à-dire dans le cas de déchargement de la benne, la porte reste verrouillée.

Selon une caractéristique additionnelle du système de fermeture selon l'invention, le moyen moteur consiste en vérin pneumatique apte à agir sur le loquet afin de permettre l'ouverture de la porte, ledit vérin étant alimenté à partir d'un réservoir de stockage ménagé dans le châssis de la benne.

Selon une autre caractéristique additionnelle du système de fermeture selon l'invention, le moyen de commande comprend deux vannes pneumatiques en série, l'une dont l'actionnement dépend de l'inclinaison de la benne, tandis que l'actionnement de l'autre dépend du déplacement la benne par rapport à la potence.

Selon un mode de réalisation particulier du système de fermeture selon l'invention, le moyen de commande comprend, pour actionner une vanne pneumatique selon l'inclinaison de la benne, un moyen mobile verticalement, apte à venir actionner ladite vanne en ouverture, lors de l'inclinaison de la benne par le biais d'un déplacement de liquide vers ledit moyen mobile.

Selon un mode de réalisation particulier système de fermeture selon l'invention, le moyen de commande comprend, pour actionner une vanne pneumatique selon le déplacement la benne par rapport à la potence, un moyen apte à actionner ladite vanne pneumatique lorsqu'il est comprimé contre ladite potence, et actionner ladite vanne pneumatique lorsqu'il n'est plus comprimé.

Selon un autre mode de réalisation du système de fermeture selon l'invention le moyen de commande comprend une vanne pneumatique conçue apte à se déplacer, en fonction de l'inclinaison de la benne ou du déplacement de celle-ci par rapport à la potence, en vue d'être ou non actionnée en étant ou non mise en appui contre une butée qui est elle-même conçue apte à se déplacer en fonction du déplacement de la benne par rapport à la potence ou de l'inclinaison de ladite benne.

Les avantages et les caractéristiques du dispositif selon l'invention, ressortiront plus clairement de la description qui suit et qui se rapporte au dessin annexé, lequel en représente plusieurs modes de réalisation non limitatifs.

Dans le dessin annexé :
- les figures 1a, 1b et 1 représentent des vues schématiques partielles en élévation et de côté, d'une benne équipée d'un premier mode de réalisation du système de fermeture selon l'invention, dans des phases différentes d'utilisation.
- la figure 2 représente une vue schématique partielle d'une partie du système de fermeture selon l'invention.
- les figures 3a et 3b représentent des vues partielles en perspective d'un second mode de réalisation du système de fermeture selon l'invention, dans des phases différentes d'utilisation.

En référence aux figures la, 1b et 1c, on peut voir une benne amovible 1 destinée à être utilisée sur les camions équipés d'un dispositif commercialisé notamment sous la dénomination "AMPLIROLL" et qui comprend une potence 2 montée mobile en basculement et en déplacement longitudinal sur le camion, non représenté, et qui est en forme de L tandis que son extrémité libre est munie d'un crochet de levage 20.

La benne 1 comprend un châssis 10, à l'arrière une porte basculante 11 et à l'avant une paroi 12 présentant dans sa région supérieure un arbre transversal de levage 13, destiné à coopérer avec le crochet de levage 20.

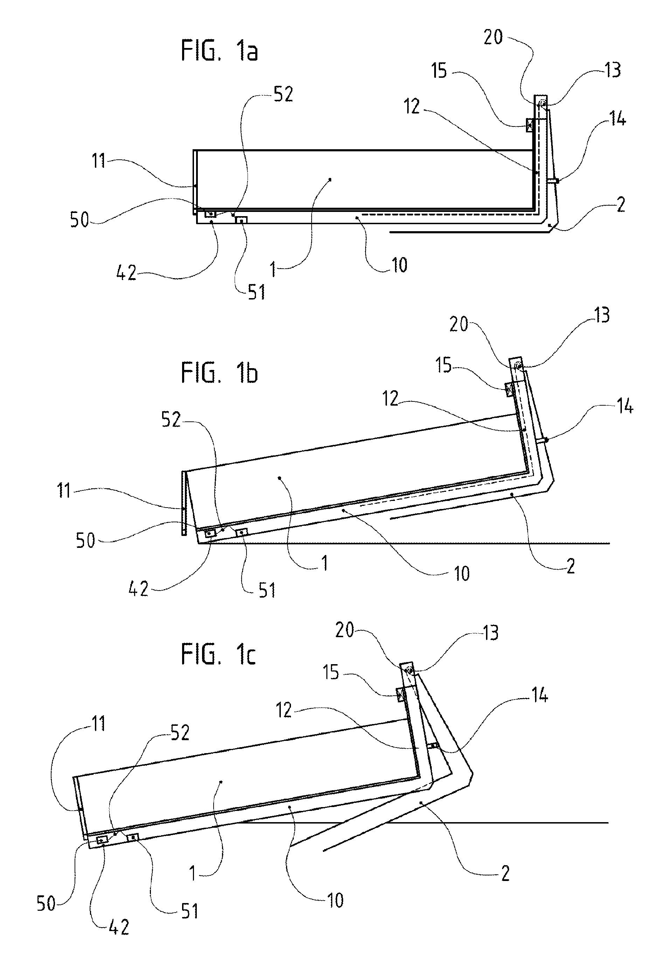

Le fonctionnement connu d'un tel dispositif "AMPLIROLL" est le suivant, la benne 1 repose sur le châssis du camion et est tenue par la potence 2 au travers du crochet de levage 20. Si la potence 2 bascule et se lève, comme cela est représenté sur la figure 1b, la benne 1 pivote autour de son extrémité arrière et se soulève parallèlement à la potence 2. Si la benne 1 est déplacée par la potence 2 longitudinalement vers l'arrière puis basculée, elle pivote sur le châssis du camion tout en glissant vers l'arrière comme cela est représenté sur la figure 1c, jusqu'à pouvoir glisser ou rouler sur le sol, et y être posée.

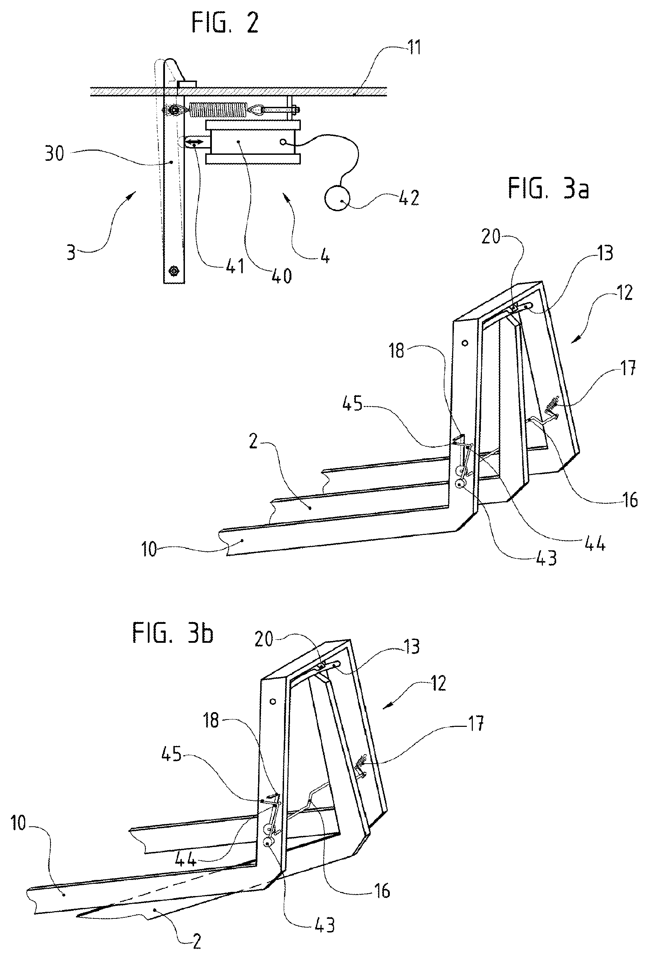

Selon l'invention, la benne 1 est munie d'un système de fermeture qui comprend un moyen 3 de verrouillage de la porte basculante 11 et un moyen moteur 4, apte à manoeuvrer le moyen de verrouillage, représentés à la figure 2.

En référence à cette figure 2, on peut ainsi voir que le moyen de verrouillage 3 comprend un loquet 30 rappelé en position de verrouillage de la porte 11 par un ressort 31, tandis que le moyen moteur 4 consiste en un vérin pneumatique 40 dont la tige 41 est apte à venir, en sortie, repousser le loquet 30, dans le sens inverse du rappel du ressort 31. Le vérin pneumatique 40 est commandé par une vanne pneumatique 42, également représentée sur les figures la, 1b et 1c.

On notera qu'une benne 1 peut être équipée de plusieurs moyens de verrouillage 3.

Du point de vue construction, l'une des poutres du châssis 10 de la benne 1, en l'occurrence la poutre transversale supérieure 15 de la paroi avant 12, est conformée en un réservoir d'air sous pression, et reliée au vérin 40 au travers d'un conduit, non représenté, via la vanne pneumatique 42.

Par ailleurs, la paroi 12 de la benne comprend également un élément capteur 14 apte à venir au contact de la potence 2 et à détecter la présence de celle-ci. Ce capteur peut se présenter sous différentes formes. Selon un mode de réalisation particulier, le capteur 14 comprend ou consiste en une vanne pneumatique intercalée entre la poutre 15 et la vanne pneumatique 42, et qui est conformée pour ouvrir l'arrivée d'air lorsque la benne 1 reste immobile par rapport à la potence 2, et inversement c'est-à-dire pour fermée l'arrivée d'air lorsque la benne 1 s'éloigne de la potence 2.

D'autre part, la vanne pneumatique 42 est commandée par un dispositif 5 sensible à l'inclinaison de la benne 1. Il peut comprendre, comme cela est schématisé sur les figures la, 1b et 1c, un réservoir 50 monté mobile verticalement au-dessus de la vanne 42, et communiquant, au travers d'un conduit 52, avec un second réservoir 51 disposé en avant et plus bas et contenant un liquide tel que de l'eau.

On comprendra que, comme cela est visible sur les figures 1b et 1c, lors de l'inclinaison de la benne 1, le liquide contenu dans le réservoir 51 passe dans le réservoir 50 qui descend et vient écraser la vanne pneumatique 42 qui s'ouvre. Inversement, lorsque la benne 1 revient en position horizontale, le liquide repasse dans le réservoir 51, et le réservoir 50 remonte, en étant rappelé par un ressort par exemple.

On comprendra également que sur la figure 1b, lorsque la benne 1 est inclinée sans s'éloigner de la potence 2, le capteur 14 et la vanne pneumatique 42 permettent l'alimentation du vérin 40 en sorte que le loquet 30 est repoussé et que la porte 11 peut s'ouvrir, autorisant le bennage. Par contre, sur la figure 1c, même si la vanne pneumatique 42 est actionnée du fait de l'inclinaison de la benne 1, le capteur 14 ferme l'arrivée d'air puisque la benne 1 s'écarte de la potence 2, en sorte que le vérin 40 n'est pas alimenté et que la porte 11 reste fermée.

En référence maintenant aux figures 3a et 3b, on peut voir un second mode de réalisation de l'invention.

On peut voir sur ces figures le châssis 10 de la benne 1 ainsi que la potence 2. Dans ce mode de réalisation le moyen de verrouillage 3 et le moyen moteur 4, non représentés, sont prévus sensiblement identiques à ceux du mode de réalisation précédent, de même en ce qui concerne le mode de stockage de l'air comprimé.

Selon l'invention, le châssis 10 comporte un balancier 43 monté pivotant sur un axe horizontal 44, sensible au basculement de la benne 1, et qui porte un capteur ou vanne pneumatique 45 de commande du fonctionnement du vérin 40.

D'autre part, le châssis 10 est équipé, au niveau de la paroi avant 12, d'une barre 16 qui s'étend transversalement, qui est pliée en forme vilebrequin, qui est mobile en pivotement axial et rappelée par un ressort 17 pour venir au contact de la potence 2. La barre 16 est par ailleurs liée à d'une butée 18 disposée sur la trajectoire du capteur pneumatique 45, dans son déplacement avec le balancier 43. La position de la benne 1 par rapport à la potence 2 définit deux positions extrêmes de la barre 16, et donc deux positions extrêmes de la butée 18, dont l'une permet le contact avec le capteur pneumatique 45, tandis que l'autre n'autorise pas un tel contact.

On comprendra que le basculement de la benne 1 a pour effet le déplacement du balancier 43 et par conséquence la mise en appui du capteur pneumatique 45 contre la butée 18, avec pour effet l'ouverture de la porte 11 lorsque la barre 16 est en butée contre la potence 2 comme cela est représenté sur la figure 3a. Par contre, figure 3b, si la benne 1 s'écarte de la potence 2, même si le balancier 43 déplace le capteur pneumatique 45 vers la butée 18, cette dernière est mise hors de portée sous l'effet du ressort 17.

On notera que le montage peut être inverse, à savoir que la capteur pneumatique 45 peut être porté par la butée 18.

Le système de fermeture selon l'invention est d'une grande simplicité de fabrication et de mise en oeuvre, de plus il est robuste.

Par ailleurs, quel que soit le mode de réalisation envisagé, il est entièrement intégré à la benne 1, et est indépendant du camion, lequel n'a pas besoin d'un équipement spécifique.

## Revendications

1. Système de fermeture de porte d'une benne amovible utilisée dans le domaine du transport de matériaux, où ladite benne (1) est du type associée un camion équipé d'un dispositif comprenant une potence (2) apte à basculer et à se mouvoir longitudinalement, et à saisir ladite benne (1) en vue soit de la poser sur le sol, soit de la charger sur le châssis dudit camion, soit de la faire basculer en vue d'un bennage, **caractérisé en ce qu'**il comprend sur ladite benne (1), d'une part au moins un loquet (3) agencé pour verrouiller la porte (11) de ladite benne (1), et apte à être actionné en ouverture, c'est-à-dire pour libérer ladite porte (11), par l'intermédiaire d'un moyen moteur pneumatique (4), et d'autre part un moyen (42; 45) de commande dudit moyen moteur (4), conçu apte à réagir au mouvement de ladite benne (1) par rapport à ladite potence (2) ainsi qu'à l'inclinaison de ladite benne (1).

2. Système de fermeture selon la revendication 1, **caractérisé en ce que** le moyen moteur (4) consiste en vérin pneumatique (40) apte à agir sur le loquet (3) afin de permettre l'ouverture de la porte (11), ledit vérin (40) étant alimenté à partir d'un réservoir (15) de stockage ménagé dans le châssis (10) de la benne (1).

3. Système de fermeture selon la revendication 1 ou la revendication 2, **caractérisé en ce que** le moyen de commande comprend deux vannes pneumatiques en série, l'une (42) dont l'actionnement dépend de l'inclinaison de la benne (1), tandis que l'actionnement de l'autre (14) dépend du déplacement la benne (1) par rapport à la potence (2).

4. Système de fermeture selon la revendication 3, **caractérisé en ce que** le moyen de commande comprend, pour actionner la vanne pneumatique (42) selon l'inclinaison de la benne, un moyen (50) mobile verticalement, apte à venir actionner ladite vanne (42) en ouverture, lors de l'inclinaison de la benne (1) par le biais d'un déplacement de liquide vers ledit moyen mobile (50).

5. Système de fermeture selon la revendication 3 ou la revendication 4, **caractérisé en ce que** le moyen de commande comprend, pour actionner une vanne pneumatique (14) selon le déplacement la benne par rapport à la potence, un moyen apte à actionner ladite vanne pneumatique (14) lorsqu'il est comprimé contre ladite potence (2), et actionner ladite vanne pneumatique (14) lorsqu'il n'est plus comprimé.

6. Système de fermeture selon la revendication 1 ou la revendication 2, **caractérisé en ce que** le moyen de commande comprend une vanne pneumatique (45) conçue apte à se déplacer, en fonction de l'inclinaison de la benne (1) ou du déplacement de celle-ci par rapport à la potence, en vue d'être ou non actionnée en étant ou non mise en appui contre une butée (18) qui est elle-même conçue apte à se déplacer en fonction du déplacement de la benne (1) par rapport à la potence (2) ou de l'inclinaison de ladite benne (1).
